# EUROPÄISCHE PATENTSCHRIFT

(11) **EP 0 379 617 B1**
(45) Veröffentlichungstag und Bekanntmachung des Hinweises auf die Patenterteilung: **15.06.1994**
(21) Anmeldenummer: 89101356.7
(22) Anmeldetag: 26.01.1989
(51) Int. Cl.: H04Q 11/04

(54) **Vermittlungseinrichtung für digitale Nachrichtensignale**
Switching device for digital communication signals
Dispositif de commutation pour signaux de données numériques

(43) Veröffentlichungstag der Anmeldung: 01.08.1990
(73) Patentinhaber: SIEMENS AKTIENGESELLSCHAFT, 80333 München (DE)
(72) Erfinder: Peitz, Albert, Ing. (grad), D-8000 München 21 (DE)

(56) Entgegenhaltungen:
- EP-A- 0 025 465
- EP-A- 0 211 337
- INTERNATIONAL SWITCHING SYMPOSIUM, 21.-25. September 1981, Montreal, Seiten 1-6; C. DURET et al.: "Experimental nodal switching system"
- IBM TECHNICAL DISCLOSURE BULLETIN, Band 26, Nr. 10A, März 1984, Seiten 5144-5145, New York, US; L.L. CHANG et al.: "Hierarchical multiprocessor system for telephone switch network"

## Beschreibung

Die Erfindung betrifft eine Vermittlungseinrichtung gemäß Oberbegriff des Patentanspruches 1. Eine derartige Vermittlungseinrichtung ist bereits bekannt ("Siemens-Zeitschrift", 51 (1977), Heft 1, Seiten 18 bis 23; "telcom report", 6, (1985), Heft 6, Seiten 339 bis 342). Bei der bekannten Vermittlungseinrichtung existieren zwei unterschiedliche Typen von Leitungsanschlußeinrichtungen. Ein erster Typ dient ausschließlich für den Anschluß von Zubringer-Einzelleitungen und Abnehmer-Einzelleitungen. Dabei werden einerseits die auf Zubringer-Einzelleitungen übertragenen Nachrichtensignale zunächst leitungsindividuell zu eine vorgegebene Anzahl von Bits umfassenden Bitgruppen aufgesammelt. Anschließend werden dann diese Bitgruppen in paralleler Form durch eine zyklische Ansteuerung der einzelnen Leitungsanschlußeinrichtungen von einer Vermittlungssteuereinrichtung her auf eine Mehrzahl von Vermittlungsbussystemen übernommen. Andererseits werden den Leitungsanschlußeinrichtungen über die Vermittlungsbussysteme Abnehmer-Einzelleitungen zugeordnete Bitgruppen von Nachrichtensignalen zugeführt, die nach einer leitungsindividuellen Parallel-Serien Wandlung über die jeweiligen Abnehmer-Einzelleitungen übertragen werden.

Ein zweiter Typ von Leitungsanschlußeinrichtungen dient für den Anschluß von Multiplexleitungen. Der auf diesen Multiplexleitungen jeweils übertragene Multiplex-Nachrichtensignalstrom wird in den einzelnen Leitungsanschlußeinrichtungen in einen für die Übertragung über ein Vermittlungsbussystem geeigneten Zeichenstrom umgesetzt, der anschließend unter der Steuerung der Vermittlungssteuereinrichtung dem jeweiligen Vermittlungsbussystem zugeführt wird.

Innerhalb der bekannten Vermittlungseinrichtung erfolgt die Übertragung von Nachrichtensignalen zwischen den an die Vermittlungseinrichtung angeschlossenen Einzelleitungen bzw. Multiplex-Leitungen ausschließlich über die Vermittlungsbussysteme. Dabei ist eine bei nicht vollständiger Auslastung der Übertragungskapazität auf den Multiplex-Leitungen vorhandene freie Übertragungskapazität nicht anderweitig nutzbar, so daß in diesem Falle die vorhandene Vermittlungskapazität nicht vollständig ausgenutzt ist.

Es ist nun Aufgabe der vorliegenden Erfindung, einen Weg zu zeigen, wie bei einer Vermittlungseinrichtung gemäß Oberbegriff des Patentanspruchs 1 die vorhandene Vermittlungskapazität gegenüber dem Stand der Technik optimaler genutzt werden kann.

Gelöst wird die vorstehend aufgezeigte Aufgabe durch die im kennzeichnenden Teil des Patentanspruches 1 angegebenen Merkmale.

Der Vorteil der Erfindung besteht einerseits darin, daß über das jeweilige Vermittlungsbussystem der Vermittlungseinrichtung Multiplex-Nachrichtensignalstöme übertragen werden, die unabhängig von der genutzten Übertragungskapazität auf den mit der Vermittlungseinrichtung verbundenen Multiplex-Leitungen an die volle Übertragungskapazität des jeweiligen Vermittlungsbussystemes und damit der Vermittlungseinrichtung angepaßt sind. Andererseits besteht der Vorteil in dem Ausblenden von über mit der jeweiligen Leitungsanschlußeinrichtung verbundenen Abnehmer-Einzelleitungen zu übertragenden Nachrichtensignalen aus einem Multiplex-Nachrichtensignalstrom bzw. in dem Einfügen von über mit der jeweiligen Leitungsanschlußeinrichtung verbundenen Zubringer-Einzelleitungen aufgenommenen Nachrichtensignalen in einen Multiplex-Nachrichtensignalstrom. Auf diese Weise ist es beispielsweise möglich, über das jeweilige Vermittlungsbussystem lediglich solche Nachrichtensignale weiterzuleiten, die zwischen Übertragungseinrichtungen eines Wählnetzes zu übertragen sind. Dagegen kann eine Übertragung von Nachrichtensignalen zwischen Übertragungseinrichtungen eines Festnetzes ohne Belastung des jeweiligen Vermittlungsbussystemes und damit ohne Inanspruchnahme von Vermittlungskapazität der jeweiligen Vermittlungseinrichtung erfolgen.

Vorteilhafte Ausgestaltungen der Erfindung ergeben sich aus den Patentansprüchen 2 und 3. Der Vorteil der Ausgestaltung gemäß Patentanspruch 2 liegt in dem geringen schaltungstechnischen Aufwand für die einzelnen Leitungsanschlußeinrichtungen. Der Vorteil der Ausgestaltung gemäß Patentanspruch 3 besteht darin, daß mit Hilfe des Mikroprozessorsysstems die Leitungsanschlußeinrichtungen an unterschiedliche Vermittlungsbussysteme angepaßt werden können. So ist es beispielsweise möglich, derartige Leitungsanschlußeinrichtungen in einer Vermittlungseinrichtung nachzurüsten, ohne Veränderungen an einem bestehenden Vermittlungsbussystem durchführen zu müssen.

Im folgenden wird nun die vorliegende Erfindung anhand von Zeichnungen beispielsweise näher erläutert.
FIG. 1 zeigt ein Blockschaltbild einer Vermittungseinrichtung, bei der die Erfindung angewandt ist, und
FIG 2 zeigt einen möglichen Aufbau einer in FIG 1 lediglich schematisch dargestellten Leitungsanschlußeinrichtung.

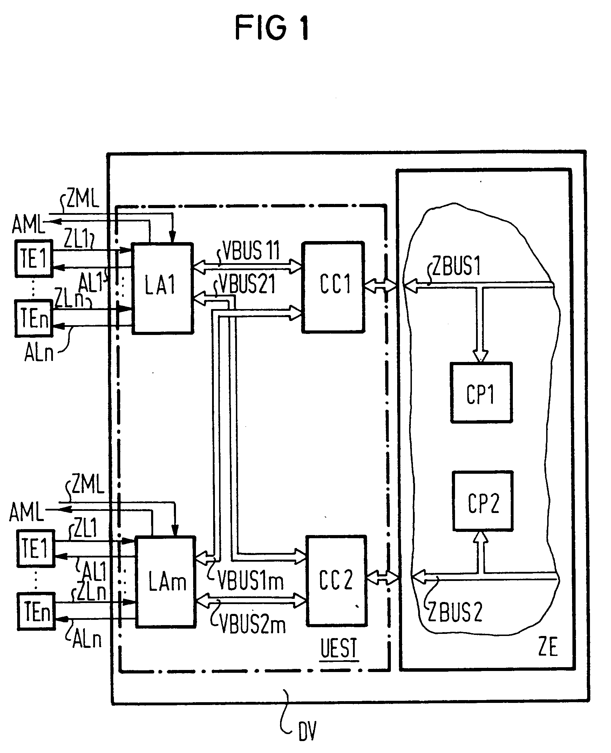

In FIG 1 ist als Beispiel eine Vermittlungseinrichtung DV für digitale Nachrichtensignale, beispielsweise Datensignale, ausschnittweise dargestellt. Diese weist eine Zentraleinheit ZE mit zwei gesonderten Zentralprozessoren CP1 und CP2 auf. Jeder dieser Zentralprozessoren ist an ein zentrales Busleitungssystem angeschlossen. Diese Busleitungssysteme sind entsprechend ihrer Zugehörigkeit zu einem dieser Zentralprozessoren mit ZBUS1 und ZBUS2 bezeichnet. Über diese Busleitungssysteme stehen die beiden Zentralprozessoren jeweils einerseits mit peripheren Einrichtungen, wie z.B. Bedieneinrichtungen und externen Speicheranordnungen, und andererseits mit einer Übertragungssteuereinrichtung einer Übertragungseinrichtung UEST in Verbindung. Die beiden Übertragungssteuereinrichtungen sind mit CC1 und CC2 bezeichnet, wobei die Übertragungssteuereinrichtung CC1 mit dem zentralen Busleitungssystem ZBUS1, die Übertragungssteuereinrichtung CC2 dagegen mit dem zentralen Busleitungssystem ZBUS2 verbunden ist.

Die Übertragungseinrichtung UEST weist weiterhin zwei Gruppen von jeweils m Vermittlungsbussystemen auf. Zu der ersten Gruppe gehörende Vermittlungsbussysteme VBUS11 bis VBUS1M, von denen lediglich die Vermittlungsbussysteme VBUS 11 und VBUS1m dargestellt sind, verbinden dabei die Übertragungssteuereinrichtung CC1 mit m Leitungsanschlußeinrichtungen LA1 bis LAm. Diese Leitungsanschlußeinrichtungen, von welchen die Leitungsanschlußeinrichtungen LA1 und LAm dargestellt sind, stehen außerdem über zu der zweiten Gruppe gehörende Vermittlungsbussysteme VBUS21 bis VBUS2m mit der Übertragungssteuereinrichtung CC2 in Verbindung. D.h. daß jede der Leitungsanschlußeinrichtungen sowohl an ein der ersten Gruppe als auch an ein der zweiten Gruppe zugehöriges Vermittlungsbussystem angeschlossen ist. Bei den beiden in FIG 1 dargestellten Leitungsanschlußeinrichtungen handelt es sich dabei um die Vermittlungssysteme VBUS11 und VBUS21 bzw. VBUS1m und VBUS2m.

An die Leitungsanschlußeinrichtungen LA1 bis LAm sind außerdem jeweils eine Zubringer-Multiplexleitung ZML für die Übertragung von digitalen Nachrichtensignalen in ankommender Übertragungsrichtung und eine Abnehmer-Multiplexleitung AML für die Übertragung von digitalen Nachrichtensignalen in abgehender Übertragungsrichtung angeschlossen. An diese Multiplexleitungen kann eine Mehrzahl von externen Übertragungseinrichtungen in Form von mit Multiplex-Einrichtungen verbundenen Teilnehmerendgeräten oder in Form von Übertragungskanälen einer weiteren Vermittlungseinrichtung angeschlossen sein. Dabei möge auf diesen Multiplexleitungen beispielsweise jeder externen Übertragungseinrichtung entsprechend der für diese festgelegten Übertragungsgeschwindigkeit wenigstens ein Zeitkanal mit in aufeinanderfolgenden Multiplexrahmen gemäß der CCITT-Empfehlung X.51 periodisch wiederholt auftretenden Zeitschlitzen zugeordnet sein.

Außerdem ist an die Leitungsanschlußeinrichtungen LA1 bis LAm jeweils eine Mehrzahl von externen Übertragungseinrichtungen über Einzelleitungen anschließbar. Diese Einzelleitungen können sowohl Zubringer-Einzelleitungen für die Übertragung von Nachrichtensignalen in ankommender Übertragungsrichtung als auch Abnehmer-Einzelleitungen für die Übertragung von Nachrichtensignalen in abgehender Übertragungsrichtung sein. An diese Zubringer-Einzelleitungen bzw. Abnehmer-Einzelleitungen sind externe Übertragungseinrichtungen anschließbar, bei denen es sich sowohl um Teilnehmerendgeräte als auch um Übertragungskanäle einer weiteren Vermittlungseinrichtung handeln kann. In FIG 1 ist als Beispiel an jede der Leitungsanschlußeinrichtungen LA1 bis LAm jeweils eine Mehrzahl von Teilnehmerendgeräten TE1 bis TEn über jeweils eine Zubringer-Einzelleitung und eine Abnehmer-Einzelleitung angeschlossen. Diese Zubringer-Einzelleitungen bzw. Abnehmer-Einzelleitungen sind entsprechend ihrer Zugehörigkeit zu den Teilnehmerendgeräten mit ZL1 bis ZLn bzw. AL1 bis ALn bezeichnet. Über diese Einzelleitungen mögen im übrigen Nachrichtensignale wahlweise nach einem asynchronen oder einem synchronen Datenübertragungsverfahren übertragbar sein.

Im folgenden wird auf die in FIG 1 dargestellte Zentraleinheit ZE und die Übertragungssteuereinrichtungen CC1 und CC2 nicht näher eingegangen, da deren Wirkungsweise und Zusammenarbeit beispielsweise aus "Siemens-Zeitschrift", 51 (1977), Heft 1, Seiten 18 bis 23 bekannt ist. Es sei hier lediglich für das Verständnis der vorliegenden Erfindung darauf hingewiesen, daß während des Betriebs der Vermittlungseinrichtung DV eine der beiden Übertragungssteuereinrichtungen CC1 und CC2 in den Vermittlungsbetrieb einbezogen ist . Von dieser Übertragungssteuereinrichtung, beispielsweise der Übertragungssteuereinrichtung CC1, werden einerseits über die einzelnen Vermittlungbussysteme, bei dem hier angenommenen Beispiel über die Vermittlungsbussysteme VBUS11 bis VBUS1m, jeweils zyklisch wiederholt Steuersignale zu den Leitungsanschlußeinrichtungen LA1 bis LAm übertragen, um über das jeweilige Vermittlungsbussystem nacheinander eine vorgegebene Anzahl von Bits umfassende Bitgruppen von Nachrichtensignalen aufzunehmen. Dabei werden den Aufbau bzw. Abbau von Wählverbindungen betreffende Nachrichtensignale der Zentraleinheit ZE für eine weitere Verarbeitung zugeführt, während im Zuge von bestehenden Verbindungen übertragene Bitgruppen ohne Einbeziehung der Zentraleinheit ZE von der jeweiligen Übertragungssteuereinrichtung an das jeweils in Frage kommende Vermittlungsbussystem weitergeleitet werden. Für eine solche Weiterleitung werden den Bitgruppen jeweils Steuersignale beigefügt, um die jeweils in Frage kommende Leitungsanschlußeinrichtung für eine Übernahme der jeweiligen Bitgruppe zu aktivieren.

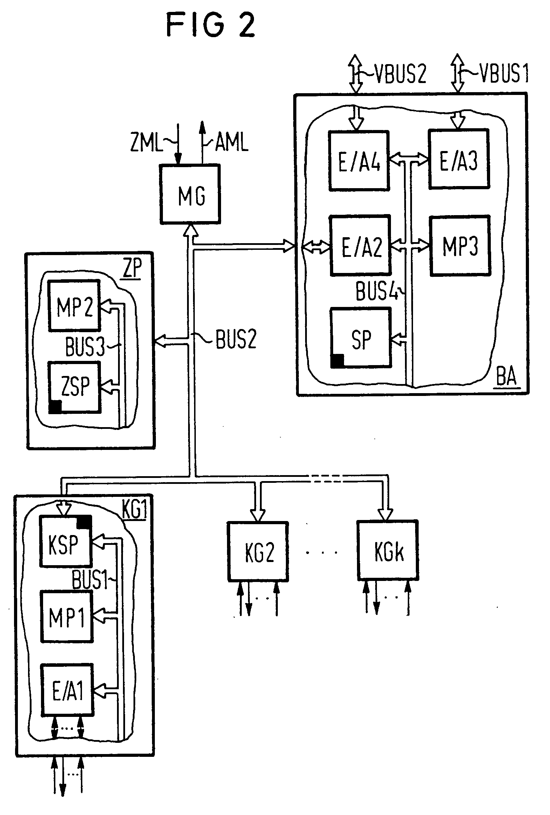

In FIG 2 ist ein möglicher Aufbau der in FIG 1 dargestellten Leitungsanschlußeinrichtungen LA1 bis LAm dargestellt. Danach weist eine Leitungsanschlußeinrichtung eine Mehrzahl von gleich aufgebauten Kanalgruppen KG1 bis KGk auf. Jede dieser Kanalgruppen stellt eine Mikroprozessoranordnung dar, die ausschnittweise für die Kanalgruppe KG1 angegeben ist. Diese Mikroprozessoranordnung weist einen Mikroprozessor MP1 auf, der über ein Busleitungssystem BUS1 mit einer Ein-/Ausgabe-Anordnung E/A1 verbunden ist. Diese Ein-/Ausgabe-Anordnung stellt dabei die Schnittstelle zu einer Vielzahl von Einzelleitungen dar, die wahlweise als Zubringer-Einzelleitungen bzw. Abnehmer-Einzelleitungen benutzt sind, über die beispielsweise Nachrichtensignale zwischen externen Übertragungseinrichtungen und der jeweiligen Leitungsanschlußeinrichtung nach einem synchronen Übertragungsverfahren, d. h. in Form von sogenannten Envelopes, übertragen werden. Es ist jedoch auch möglich, die Kanalgruppen so auszulegen, daß an die Zubringer-Einzelleitungen bzw. Abnehmer-Einzelleitungen Übertragungseinrichtungen anschließbar sind, die Nachrichtensignale nach einem asynchronen Übertragungsverfahren, d. h. in Form von Start-Stop-Nachrichtensignalen, aufnehmen bzw. abgeben.

Mit dem genannten Busleitungssystem BUS1 ist außerdem ein Kanalspeicher KSP verbunden. Dieser Kanalspeicher weist für jede der mit der jeweiligen Kanalgruppe, hier mit der Kanalgruppe KG1, verbundenen Einzelleitungen einen Speicherbereich auf, in welchem an die jeweilige Einzelleitung abzugebende bzw. von dieser aufzunehmende Nachrichtensignale bitgruppenweise speicherbar sind.

Die genannten Kanalgruppen KG1 bis KGk sind außerdem zusammen mit einer Multiplexgruppe MG und einem Busadapter BA an ein Busleitungssystem BUS2 eines Zentralprozessors ZP angeschlossen. An die Multiplexgruppe sind dabei eine Zubringer-Multiplexleitung ZML und eine Abnehmer-Multiplexleitung AML herangeführt. Die Multiplexgruppe dient im wesentlichen einerseits für eine Serien-Parallel-Wandlung von in Zeitschlitzen aufeinanderfolgender Multiplexrahmen gemäß der CCITT-Empfehlung X.51 auftretenden Bitgruppen und damit für eine Bereitstellung eines dem seriell empfangenen Multiplex-Nachrichtensignalstrom entsprechenden bitgruppenweise seriellen Multiplex-Nachrichtensignalstromes. Andererseits nimmt die Multiplexgruppe MG eine Parallel-Serien Wandlung eines ihr über das Busleitungssystem BUS2 zugeführten bitgruppenweise seriellen Multiplex-Nachrichtensignalstromes vor und leitet den umgesetzten Multiplex-Nachrichtensignalstrom anschließend über die Abnehmer-Multiplexleitung AML in serieller Form weiter.

Der Zentralprozessor ZP weist eine Mikroprozessoranordnung auf, die in FIG 2 ausschnittweise dargestellt ist. Dieser Mikroprozessoranordnung ist ein Mikroprozessor MP2 zugehörig, der über ein Busleitungssystem BUS3 mit einem Zuordnungsspeicher ZSP verbunden ist. In diesem Zuordnungsspeicher ist eine Tabelle gespeichert, aus welcher die Zuordnung zwischen den in den Multiplexrahmen festgelegten Zeitschlitzen und den einzelnen Kanalgruppen sowie den mit diesen verbundenen Einzelleitungen hervorgeht. Darüber hinaus weist der Mikroprozessor MP2 zwei in FIG 2 nicht näher dargestellte Zähleranordnungen, beispielsweise in Form von Zählregistern, auf, die jeweils mit einer der Anzahl der in einem Multiplexrahmen festgelegten Zeitschlitze entsprechenden Zählperiode umlaufen.

Eine der Zähleranordnungen dient dem Mikroprozessor MP2 für eine Weiterleitung des von der Multiplexgruppe MG übernommenen bitgruppenweise seriellen Multiplex-Nachrichtensignalstromes an den bereits genannten Busadapter BA, der über zwei Vermittlungsbussysteme mit den in FIG 1 dargestellten Übertragungssteuereinrichtungen CC1 und CC2 verbunden ist. Die beiden Vermittlungsbussysteme sind in FIG 2 mit VBUS1 und VBUS2 bezeichnet. Die gerade erwähnte Zähleranordnung wird im übrigen durch für die Synchronisierung dienende Steuersignale synchronisiert, die in dem auf dem Busleitungssystem BUS2 auftretenden Multiplex-Nachrichtensignalstrom enthalten sind. Diese Steuersignale werden vor einer Weiterleitung des Multiplex-Nachrichtensignalstromes an den Busadapter ausgeblendet.

Der Mikroprozessor MP2 modifiziert den an den Busadapter BA weiterzuleitenden Multiplex-Nachrichtensignalstrom nach Maßgabe der Zählerstände der zuvor genannten Zähleranordnung und der im Zuordnungsspeicher ZSP gespeicherten Tabelle in der Weise, daß einerseits festgelegten Zeitschlitzen zugeordnete Bitgruppen den jeweils in Frage kommenden Kanalgruppen KG1 bis KGk für eine Weiterleitung an Abnehmer-Einzelleitungen direkt zugeführt werden. Andererseits werden entsprechend der Kapazität an nicht belegten Zeitschlitzen innerhalb der Multiplexrahmen des über die Multiplexgruppe MG empfangenen Multiplex-Nachrichtensignalstromes in Kanalgruppen gespeicherte Bitgruppen übernommen und in den auf dem Busleitungssystem BUS2 auftretenden Multiplex-Nachrichtensignalstrom eingefügt.

Die andere Zähleranordnung des Zentralprozessors dient dem Mikroprozessor MP2 einerseits für das Einfügen von Steuersignalen, die durch die CCITT-Empfehlung X.51 vorgegeben sind, in einen auf dem Busleitungssystem BUS2 auftretenden, von dem Busadapter BA bereitgestellten bitgruppenweise seriellen Multiplex-Nachrichtensignalstrom. Andererseits werden nach Maßgabe der Zählerstände dieser Zähleranordnung und der in dem Zuordnungsspeicher ZSP gespeicherten Tabelle in diesem Multiplex-Nachrichtensignalstrom auftretende, festgelegten Zeitschlitzen zugeordnete Bitgruppen den jeweils in Frage kommenden Kanalgruppen KG1 bis KGk für eine Weiterleitung an Abnehmer-Einzelleitungen zugeführt. Außerdem werden von Zubringer-Einzelleitungen aufgenommene und in den Kanalgruppen zunächst gespeicherte Bitgruppen in nicht belegte Zeitschlitze des von dem Busadapter BA bereitgestellten Multiplex-Nachrichtensignalstromes eingefügt.

Der zuvor erwähnte Busadapter BA ist als Mikroprozessoranordnung ausgebildet. Diese Mikroprozessoranordnung, die in FIG 2 ausschnittweise dargestellt ist, weist einen Mikroprozessor MP3 auf, an dessen Busleitungssystem BUS4 als Schnittstelle zu dem Busleitungssystem BUS2 eine Ein-/Ausgabe-Anordnung E/A2 angeschlossen ist. Mit dem Busleitungssystem BUS4 stehen darüber hinaus eine als Arbeits- und Programmspeicher dienende Speicheranordnung SP sowie zwei weitere Ein-/Ausgabe-Anordnungen E/A3 und E/A4 in Verbindung. An diese Ein-/Ausgabe-Anordnungen ist jeweils eines der bereits zuvor erwähnten Vermittlungsbussysteme VBUS1 und VBUS2 angeschlossen. Diese Mikroprozessoranordnung nimmt eine Anpassung der Busleitungsanordnung BUS2 an die beiden mit der jeweiligen Leitungsanschlußeinrichtung verbundenen Vermittlungsbussysteme vor. Dabei wickelt sie selbsttätig alle diejenigen Kommunikationen mit der gerade in den Vermittlungsbetrieb einbezogenen Übertragungssteuereinrichtung (CC1, CC2) ab, die für eine Abgabe eines Multiplex-Nachrichtensignalstromes an das jeweilige Vermittlungsbussystem bzw. für eine Aufnahme eines Multiplex-Nachrichtensignalstromes von dem jeweiligen Vermittlungsbussystem festgelegt sind.

Aus der vorstehenden Beschreibung des Aufbaues und der Wirkungsweise der Leitungsanschlußeinrichtungen LA1 bis LAm geht hervor, daß über die Vermittlungsbussysteme der Vermittlungseinrichtung DV Multiplex-Nachrichtensignalströme übertragen werden, die unabhängig von der genutzten Übertragungskapazität auf den mit der Vermittlungseinrichtung verbundenen Multiplex-Leitungen an die volle Übertragungskapazität der Vermittlungsbussysteme und damit der Vermittlungseinrichtung angepaßt sind. Darüber hinaus besteht der Vorteil der Leitungsanschlußeinrichtungen in dem Ausblenden von Nachrichtensignalen aus einem Multiplex-Nachrichtensignalstrom, die über mit der jeweiligen Leitungsanschlußeinrichtung verbundene Abnehmer-Einzelleitungen zu übertragen sind, bzw. in dem Einfügen von Nachrichtensignalen in einen Multiplex-Nachrichtensignalstrom, die über mit der jeweiligen Leitungsanschlußeinrichtung verbundene Zubringer-Einzelleitungen aufgenommenen werden. Damit besteht die Möglichkeit, über die Vermittlungsbussysteme der Vermittlungseinrichtung DV lediglich solche Nachrichtensignale weiterzuleiten, die zwischen Übertragungseinrichtungen eines Wählnetzes zu übertragen sind. Dagegen können Nachrichtensignale zwischen Übertragungseinrichtungen eines Festnetzes durch Einfügen bzw. Ausblenden von Nachrichtensignalen in bzw. aus Multiplex-Nachrichtensignalströmen übertragen werden, ohne daß die Vermittlungsbussysteme belastet werden und damit ohne daß Vermittlungskapaziät der Vermittlungseinrichtung in Anspruch genommen wird.

Abschließend sei noch darauf hingewiesen, daß zwar vorstehend die vorliegende Erfindung am Beispiel von Leitungsanschlußeinrichtungen beschrieben worden ist, an welche neben Einzelleitungen Multiplex-Leitungen anschließbar sind, über die Multiplex-Nachrichtensignalströme gemäß der CCITT-Empfehlung X.51 übertragbar sind. Die Erfindung ist jedoch auch für die Übertragung von Multiplex-Nachrichtensignalströmen mit von dieser Empfehlung abweichenden Multiplexstrukturen benutzbar. Darüber hinaus können die Leitungsanschlußeinrichtungen mit Hilfe des jeweiligen Busadapters an beliebige Vermittlungsbussysteme einer Vermittlungseinrichtung angepaßt werden. So ist es beispielsweise auch möglich, die Leitungsanschlußeinrichtungen abweichend von FIG 1 gemeinsam an ein einziges Vermittlungsbussystem einer Vermittlungseinrichtung anzuschließen.

## Patentansprüche

1. Vermittlungseinrichtung (DV) für die Aufnahme von auf einzelnen Übertragungseinrichtungen zugeordneten Zubringer-Einzelleitungen (ZL1 bis ZLn) und auf einer Mehrzahl von Übertragungseinrichtungen gemeinsam zugeordneten Zubringer-Multiplexleitungen (ZML) auftretenden digitalen Nachrichtensignalen, insbesondere Datensignalen, und für die Weiterleitung der aufgenommenen Nachrichtensignale an einzelnen Ubertragungseinrichtungen zugeordnete Abnehmer-Einzelleitungen (AL1 bis ALn) bzw. einer Mehrzahl von Übertragungseinrichtungen gemeinsam zugeordnete Abnehmer-Multiplexleitungen (AML), wobei auf den Zubringer-Multiplexleitungen und Abnehmer-Multiplexleitungen den einzelnen Übertragungseinrichtungen jeweils entsprechend der für diese vorgesehenen Übertragungsgeschwindigkeit wenigstens ein Zeitkanal einer Vielzahl von Zeitkanälen mit jeweils zyklisch wiederholt in aufeinanderfolgenden Multiplexrahmen auftretenden Zeitschlitzen zugeordnet ist, mit einer Mehrzahl von für den Anschluß von Einzelleitungen und Multiplex-Leitungen dienenden Leitungsanschlußeinrichtungen (LA1,..., LAm) welche an wenigstens ein von einer Vermittlungssteuereinrichtung (UEST) her im Zeitmultiplex-Betrieb gesteuertes Vermittlungsbussystem (VBUS1, VBUS2) angeschlossen sind,
**dadurch gekennzeichnet**,
daß an jede der Leitungsanschlußeinrichtungen (LA1,..., LAm) wenigstens eine Zubringer-Multiplexleitung (ZML) und eine Abnehmer-Multiplexleitung (AML) sowie eine Mehrzahl von Zubringer-Einzelleitungen (ZL bis ZLn) und Abnehmer-Einzelleitungen (AL1 bis ALn) wahlfrei anschließbar sind,
daß der einer Leitungsanschlußeinrichtung von einer Zubringer-Multiplexleitung her zugeführte, aus den in den einzelnen Zeitkanälen übertragenen Nachrichtensignalen gebildete Multiplex-Nachrichtensignalstrom derart modifiziert wird, daß einerseits in einer Anzahl festgelegter Zeitkanäle übertragene Nachrichtensignale direkt an mit der jeweiligen Leitungsanschlußeinrichtung verbundene Abnehmer-Einzelleitungen weitergeleitet werden und andererseits in eine Anzahl nicht belegter Zeitkanäle des jeweiligen Multiplex-Nachrichtensignalstromes über mit der jeweiligen Leitungsanschlußeinrichtung verbundene Zubringer-Einzelleitungen aufgenommene Nachrichtensignale eingefügt werden,
daß der modifizierte Multiplex-Nachrichtensignalstrom direkt dem jeweiligen Vermittlungsbussystem (VBUS1, VBUS2) zugeführt ist, und daß ein einer Leitungsanschlußeinrichtung von dem jeweiligen Vermittlungsbussystem her zugeführter Multiplex-Nachrichtensignalstrom vor einer Weiterleitung an eine zugeordnete Abnehmer-Multiplexleitung derart modifiziert wird, daß einerseits in einer Anzahl festgelegter Zeitkanäle auftretende Nachrichtensignale an mit der jeweiligen Leitungsanschlußeinrichtung verbundene Abnehmer-Einzelleitungen weitergeleitet werden und andererseits in eine Anzahl nicht belegter Zeitkanäle des Multiplex-Nachrichtensignalstromes über mit der jeweiligen Leitungsanschlußeinrichtung verbundene Zubringer-Einzelleitungen aufgenommene Nachrichtensignale eingefügt werden.

2. Vermittlungseinrichtung nach Anspruch 1,
**dadurch gekennzeichnet**,
daß jede der Leitungsanschlußeinrichtungen (LA1,...,LAm) wenigstens eine erste Einrichtung (MG) für die Aufnahme eines über eine Zubringer-Multiplexleitung übertragenen Multiplex-Nachrichtensignalstromes und für die Abgabe eines Multiplex-Nachrichtensignalstromes an eine Abnehmer-Multiplexleitung sowie wenigstens eine zweite Einrichtung (z. B. KG1) aufweist, über welche wahlweise Nachrichtensignale von Zubringer-Einzelleitungen (ZL) aufnehmbar bzw. an Abnehmer-Einzelleitungen (AL) abgebbar sind, daß die erste und die zweite Einrichtung bzw. zweiten Einrichtungen gemeinsam an ein Busleitungssystem (BUS2) einer zentralen Steuereinrichtung (ZP) angeschlossen sind,
daß das Busleitungssystem zusätzlich über eine dritte Einrichtung (BA) mit dem jeweiligen Vermittlungsbussystem (VBUS1, VBUS2) der Vermittlungseinrichtung (DV) in Verbindung steht,
daß in der zentralen Steuereinrichtung (ZP) Angaben bezüglich derjenigen Zubringer-Einzelleitungen und Abnehmer-Einzelleitungen hinterlegt sind, von welchen Nachrichtensignale in festgelegte Zeitkanäle des Multiplex-Nachrichtensignalstromes aufzunehmen sind bzw. an welche in festgelegten Zeitkanälen des Multiplex-Nachrichtensignalstromes auftretende Nachrichtensignale weiterzuleiten sind,
und daß unter der Steuerung der zentralen Steuereinrichtung nach Maßgabe der hinterlegten Angaben eine Modifizierung des über die dritte Einrichtung (BA) an das jeweilige Vermittlungsbussystem (VBUS1, VBUS2) weiterzuleitenden bzw. von dem Vermittlungsbussystem her aufgenommenen Multiplex-Nachrichtensignalstromes vorgenommen wird.

3. Vermittlungseinrichtung nach Anspruch 2,
**dadurch gekennzeichnet**,
daß die dritte Einrichtung (BA) als Mikroprozessorsystem ausgebildet ist, welches eine Anpassung des Busleitungssystems (BUS 2) der jeweiligen Leitungsanschlußeinrichtung an das jeweilige Vermittlungsbussystem (VBUS 1,VBUS2) vornimmt.

## Claims

1. Switching device (DV) for receiving digital communication signals, preferably data signals, occurring on single offering trunks (ZL1 to ZLn) assigned to single transmission devices and on multiplexed offering trunks (ZML) assigned jointly to a plurality of transmission devices, and for forwarding the received communication signals to single serving trunks (AL1 to ALn) assigned to individual transmission devices or to multiplexed serving trunks (AML) assigned jointly to a plurality of transmission devices respectively, in which at least one time slot of a plurality of time slots having in each case time slices occurring repeatedly in cyclical fashion in successive multiplex frames is assigned to the individual transmission devices on the multiplexed offering trunks and multiplexed serving trunks in accordance with the transmission rate provided for them in each case, having a plurality of line termination devices (LA1, ..., LAm) which serve for the connection of single trunks and multiplexed trunks and which are connected to at least one switching bus system (VBUS1, VBUS2) controlled from a switching control device (UEST) during time-division multiplexing operation, characterized in that at least one multiplexed offering trunk (ZML) and one multiplexed serving trunk (AML) and also a plurality of single offering trunks (ZL to ZLn) and single serving trunks (AL1 to ALn) can be optionally connected to each of the line termination devices (LA1, ..., LAm), in that the multiplexed communication signal stream formed from the communication signals transmitted in the individual time slots and supplied to a line termination device from a multiplexed offering trunk, is modified in such a way that on the one hand communication signals transmitted in a number of defined time slots are forwarded directly to single serving trunks connected to the respective line termination device, and on the other hand communication signals received via single offering trunks connected to the respective line termination device are inserted into a number of non-occupied time slots of the respective multiplexed communication signal stream, in that the modified multiplexed communication signal stream is supplied directly to the respective switching bus system (VBUS1, VBUS2), and in that before forwarding to an assigned multiplexed serving trunk, a multiplexed communication signal stream supplied to a line termination device from the respective switching bus system is modified in such a way that on the one hand communication signals occurring in a number of defined time slots are forwarded to single serving trunks connected to the respective line termination device, and on the other hand communication signals received via single offering trunks connected to the respective line termination device are inserted into a number of non-occupied time slots of the multiplexed communication signal stream.

2. Switching device according to Claim 1, characterized in that each of the line termination devices (LA1, ..., LAm) has at least one first device (MG) for receiving a multiplexed communication signal stream transmitted via a multiplexed offering trunk and for outputting a multiplexed communication signal stream to a multiplexed serving trunk, and also at least one second device (for example KG1) via which it is optionally possible to receive communication signals from single offering trunks (ZL) or output them to single serving trunks (AL), in that the first and the second device or second devices are connected jointly to a bus line system (BUS2) of a central control device (ZP), in that the bus line system is additionally connected via a third device (BA) to the respective switching bus system (VBUS1, VBUS2) of the switching device (DV), in that there is stored in the central control device (ZP) information with respect to the particular single offering trunks and single serving trunks which are to receive communication signals in defined time slots of the multiplexed communication signal stream or, respectively, to which communication signals occurring in defined time slots of the multiplexed communication signal stream are to be forwarded, and in that, under the control of the central control device, the multiplexed communication signal stream to be forwarded via the third device (BA) to the respective switching bus system (VBUS1, VBUS2), or to be received from the switching bus system respectively, is modified in accordance with the information stored.

3. Switching device according to Claim 2, characterized in that the third device (BA) is designed as a microprocessor system which matches the bus line system (BUS2) of the respective line termination device to the respective switching bus system (VBUS1, VBUS2).

## Revendications

1. Dispositif de commutation (DV) pour la réception de signaux numériques d'informations, notamment de signaux de données, apparaissant sur les diverses lignes (ZL1 à ZLn) d'un circuit d'arrivée, associées aux divers dispositifs de transmission, et sur une multiplicité de lignes de multiplex (ZML) d'un circuit d'arrivée, associées en commun par des dispositifs de transmission, et pour la transmission des signaux d'informations reçus aux diverses lignes d'un circuit de sortie (AL1 à ALn), associées aux divers dispositifs de transmission, ou aux lignes de multiplex (AML) d'un circuit de sortie, associées en commun à une multiplicité de dispositifs de transmission, du type dans lequel, sur les lignes de multiplexage du circuit d'arrivée et du circuit de sortie de chacun des dispositifs de transmission, un canal temporel d'un grand nombre de canaux temporels comportant des coupures temporelles se répétant cycliquement et apparaissant dans des séquences de multiplex successives, est associé, en fonction de la vitesse de transmission prévue pour ces dispositifs, à une multiplicité de dispositifs de raccordement de lignes (LA1,..., LAm) servant pour le raccordement des lignes individuelles et des lignes de multiplex, et qui sont reliés à au moins un système de bus de commutation (VBUS1, VBUS2) commandé par un dispositif de commande de commutation (UEST) en fonctionnement à multiplexage dans le temps,
caractérisé par le fait
qu'à chaque dispositif de raccordement de lignes (LA1,..., LAm) sont susceptibles d'être reliées, au choix, au moins une ligne de multiplex (ZML) du circuit d'arrivée et une ligne de multiplex (AML) du circuit de sortie ainsi qu'une multiplicité de lignes individuelles (ZL à ZLn) du circuit d'arrivée et une multiplicité de lignes individuelles (AL1 à ALn) du circuit de sortie,
que le courant de signal d'information de multiplex envoyé à un dispositif de raccordement de lignes par une ligne de multiplex du circuit d'arrivée et formé à partir des signaux d'informations transmis dans chacun des canaux temporels, est modifié de telle sorte que, d'une part, des signaux d'informations transmis dans un nombre fixe de canaux temporels sont retransmis directement à des lignes individuelles du circuit de sortie relié au dispositif de raccordement de lignes respectif, et que, d'autre part, des signaux d'informations apportés par l'intermédiaire des lignes individuelles du circuit d'arrivée reliées au dispositif de raccordement de lignes respectif, sont introduits dans un nombre de canaux temporels non occupés du courant de signal d'information de multiplex respectif,
que le courant de signal d'information de multiplex modifié est envoyé directement au système de bus de commutation respectif (VBUS1, VBUS2),
et qu'un courant de signal d'information de multiplex envoyé à un dispositif de raccordement de ligne par le système de bus de commutation respectif est modifié avant une retransmission à une ligne de multiplex au circuit de sortie associé, de telle sorte que, d'une part, des signaux d'informations apparaissant dans un certain nombre de canaux occupés sont retransmis aux lignes individuelles du circuit de sortie reliées au dispositif respectif de raccordement de lignes et que, d'autre part, des signaux d'informations apportés par l'intermédiaire des lignes individuelles du circuit d'arrivée reliées au dispositif respectif de raccordement de lignes sont introduits dans un certain nombre de canaux temporels inoccupés du courant de signal d'information de multiplex.

2. Dispositif de commutation suivant la revendication 1,
caractérisé par le fait
que chacun des dispositifs de raccordement de lignes (LA1, ..., LAm) comporte un premier dispositif (MG) pour la réception d'un courant de signal d'information de multiplex transmis par l'intermédiaire d'une ligne à multiplex du circuit d'arrivée, et pour la délivrance d'un courant de signal d'information de multiplex à une ligne de multiplex du circuit de sortie ainsi qu'au moins deux dispositifs (par exemple KG1), par l'intermédiaire desquels des signaux d'informations peuvent être, au choix, envoyés par des lignes individuelles (ZL) du circuit d'arrivée ou fournis à des lignes individuelles (AL) du circuit de sortie, que les premier et deuxième dispositifs ou les deuxièmes dispositifs sont reliés en commun à un système de ligne de bus (BUS2) d'un dispositif de commande central (ZP),
que le système de ligne de bus est en liaison, en supplément, par l'intermédiaire d'un troisième dispositif (BA), au système de bus de commutation respectif (VBUS1, VBUS2) du dispositif de commutation (DV),
que dans le dispositif central de commande (ZP), sont introduites des données concernant les lignes du circuit d'arrivée et les lignes du circuit de sortie, par lesquelles sont envoyés des signaux d'informations dans des canaux temporels occupés du courant de signal d'informations de multiplex ou auquel sont retransmis des signaux d'informations apparaissant dans des canaux temporels occupés du courant de signal d'information de multiplex,
et que, sous la commande du dispositif central de commande, après avoir effectué l'introduction des données, une modification du courant de signal d'information de multiplex retransmis par l'intermédiaire du troisième dispositif (BA) au système de bus de commutation respectif (VBUS1, VBUS2) ou apporté par le système de bus de commutation respectif, est effectuée.

3. Dispositif de commutation suivant la revendication 2,
caractérisé par le fait
que le troisième dispositif (BA) a la forme d'un système à microprocesseur, qui effectue une adaptation du système de ligne de bus (BUS 2) du dispositif respectif de raccordement de lignes au système de bus de commutation respectif (VBUS 1, VBUS2).
